# EUROPÄISCHE PATENTSCHRIFT

(11) **EP 2 984 011 B1**
(45) Veröffentlichungstag und Bekanntmachung des Hinweises auf die Patenterteilung: **10.05.2017**
(21) Anmeldenummer: 14715824.0
(22) Anmeldetag: 27.03.2014
(51) Int. Cl.: B65G 43/10

(54) **FÖRDERSYSTEM MIT EINER REGELUNGSEINHEIT UND ENTSPRECHENDES VERFAHREN**
CONVEYOR SYSTEM WITH A REGULATING UNIT, AND CORRESPONDING METHOD
SYSTÈME DE TRANSPORT MUNI D'UNE UNITÉ DE RÉGULATION ET PROCÉDÉ CORRESPONDANT

(30) Priorität: 11.04.2013 CH 756132013
(43) Veröffentlichungstag der Anmeldung: 17.02.2016
(73) Patentinhaber: Ferag AG, 8340 Hinwil (CH)
(72) Erfinder: MÄDER, Carl, Conrad, CH-8335 Hittnau (CH)
(74) Vertreter: Frei Patent Attorneys
(86) Internationale Anmeldenummer: PCT/CH2014/000040
(87) Internationale Veröffentlichungsnummer: WO 2014/166004

(56) Entgegenhaltungen:
- EP-A1- 2 522 602
- EP-A2- 2 159 655
- US-A1- 2004 003 982

## Beschreibung

Die Erfindung bezieht sich auf das Gebiet der Fördertechnik, beispielsweise für Stückgüter, insbesondere vereinzelte Stückgüter. Sie bezieht sich auf ein Fördersystem mit Förderabschnitten und auf ein Verfahren zur Regelung von Antrieben von Förderabschnitten des Fördersystems gemäss dem Oberbegriff der entsprechenden unabhängigen Patentansprüche.

Fördereinrichtungen mit Förderern zum vereinzelten Fördern von Produkten, beispielsweise Druckereiprodukten wie Zeitungen, Hefte, Broschüren sowie Kollektionen derselben, sind bekannt. Damit wird jeweils ein Produkt von den anderen getrennt, also einzeln gefördert, wobei die Produkte von Greifern gehalten, in Taschen oder auf Sätteln oder auf Förderbändern liegend sind. Solche Förderer können sich über eine Förderstrecke von bis zu mehrere hundert Meter erstrecken. Sie können verteilte Antriebe aufweisen, wobei die Leistung der Antriebe entsprechend dem Verlauf des jeweiligen Förderers ausgelegt ist. Zur Übergabe von Produkten zwischen Förderern können Übergabeförderer eingesetzt werden. Deren Bewegung muss mit der Bewegung der Förderer synchronisiert werden, damit die Produkte einzeln übergeben werden können. Dies kann durch eine zentralisierte, übergeordnete Steuerung oder Taktvorgabe geschehen. Dies erhöht jedoch die Komplexität der Steuerung sowie den Aufwand zur Programmierung und Inbetriebnahme der Steuerung.

EP 2 130 103 B1 beschreibt ein Antriebssteuerungssystem für ein Förderband. Es soll eine balancierte Krafteinspeisung und Geschwindigkeitsregelung ermöglichen. Dazu wird eine Belastung des Förderbandes gemessen und werden mit einer dynamischen Kettenzug-Berechnungs-Software erforderliche Antriebsmomente für mehrere Antriebe zentral berechnet. Die Belastung wird gemessen, indem gezählt wird, wie viele Kettenglieder sich in einem gegebenen Abschnitt befinden, oder indem erfasst wird, wo entlang der Förderstrecke sich einzelne geförderte Produkte befinden. Es muss somit bekannt sein, wie ein einzelnes Produkt sich auf die Belastung des Bandes auswirkt, zudem in Abhängigkeit davon, ob das Band horizontal verläuft oder auf- oder absteigt. Ferner liegt eine zentrale Steuerung vor, welche Informationen über alle Abschnitte des Förderbandes kennen muss.

DE 102 45 323 B4 offenbart ein Verfahren zur Ermittlung der Geschwindigkeit eines Kettengliedbandes. Dabei wird an zwei Stellen, bei denen das Band vorbeiläuft, andauernd eine Eigenschaft des Bandes gemessen. Die Messsignale werden miteinander korreliert, wodurch sich ein zeitlicher Versatz ergibt, und daraus die Geschwindigkeit des Bandes.

DE 20 2012 003 907 U1 beschreibt ein Überwachungssystem für Zug- und Druckkräfte in einer Kette, welche zur geschützten Führung von Kabeln, Schläuchen und dergleichen dient. Dazu wird an einem bewegten Ende der Kette ein Element zur Messung dieser Kräfte angeordnet. Das Element ist als Biegebalken ausgebildet und weist Sensoren zur Messung seiner Verformung auf.

DE 201 21 622 U1 offenbart eine Förderkette, welche zur Überwachung Mikrosensoren an den Kettengliedern aufweist. Die Mikrosensoren weisen beispielsweise Dehnmessstreifen auf, sowie Datenspeicher und Mittel zur drahtlosen Datenübertragung an eine externe Messdatenauswertung.

DE 203 19 743 U1 zeigt eine Kontrollvorrichtung zur Überwachung der mechanischen Spannung einer Sägekette. Die Spannung kann mit einem federbelasteten Hebel, der unter die Sägekette greift, gemessen werden.

GB 1 524 971 offenbart die Regelung eines Fördersystems mit mehreren Antrieben. Jeder Antrieb hat eine Geschwindigkeitsregelung. Jede Geschwindigkeitsregelung erhält ein Sollsignal aus einer überlagerten Drehmomentregelung, um das Drehmoment des dazugehörigen Antriebs auf einen Drehmomentsollwert zu regeln. Der Drehmomentsollwert für mehrere "Slave"-Antriebe ist gleich dem Istdrehmoment eines "Master"-Antriebes. Die Messung des Drehmomentes jedes Antriebs geschieht durch eine Messung des Stromes zur Speisung des Antriebs. Die Geschwindigkeit wird mit einem Tachogenerator an der Antriebsachse gemessen.

WO 2012/060999 befasst sich mit der Dämpfung von Schwingungen eines elastischen Förderbandes. Dazu werden verteilte Antriebe eingesetzt, die zwar primär der Schwingungsdämpfung dienen, aber auch zur Unterstützung eines Hauptantriebes dienen können. Die Schwingungen werden mit auf dem Band mitlaufenden Beschleunigungssensoren in beispielsweise drei orthogonale Richtungen gemessen. Jeweils einem Antriebsregler ist eine Regelzone entlang des Bandes zugeordnet. Beschleunigungssensoren in einer Regelzone übermitteln ihre Messungen jeweils an einen Regler für diese Zone.

EP 2159655 beschreibt eine zentralisierte Steuerung von verteilten Reglern in einem Fördersystem. Der Schwerpunkt der Anmeldung betrifft die Kommunikation zwischen diesen Reglern. Es ist von "load sensor" und "load height sensor" die Rede, die "reflective type sensors" sind. Offenbar handelt es sich um Sensoren, die das Vorhandensein eines transportierten Gegenstands ("load") detektieren ("load status").

JP S5733115 scheint in ähnlicher Weise wie die vorgenannte EP 2159655 eine Fördervorrichtung zu beschreiben, wo entsprechend der Präsenz von geförderten Objekten einzelne Abschnitte gesteuert werden, d.h. sie werden beim Vorhandensein eines Objektes eingeschaltet und nach dessen Beförderung wieder ausgeschaltet.

DE 102007006839 zeigt eine Fördervorrichtung mit mehreren Förderabschnitten. Jeder Förderabschnitt weist mehrere Antriebe auf, die zu- und abschaltbar sind. Die Drehzahl der Antriebe ist lastabhängig. Als Stand der Technik werden geregelte Antriebe genannt und als zu aufwendig eingestuft. An einem als Master betrachteten Antrieb wird die Last gemessen (z.B. der Einbruch der Drehzahl bei einer grossen Last) und dem entsprechend werden einer oder mehrere weitere Antriebe im selben Förderabschnitt eingeschaltet oder ausgeschaltet.

DE 19921165 zeigt ein Fördersystem mit Riemenantrieb. In aufeinanderfolgenden Abschnitten wird jeweils die Bewegung in einem Abschnitt durch eine pneumatische Kupplung gestoppt, wenn im darauffolgenden Abschnitt die Präsenz eines Artikels detektiert wird.

DE 19644092 zeigt, wie in einem umlaufenden Förderer mit mehreren Antrieben an einer oder mehreren Stellen eine Kettenspannung mit einer Umlenkrolle gemessen wird. Dem entsprechend wird die Geschwindigkeit der Antriebe angepasst.

US 2004/003982 A1 zeigt ein Fördersystem mit den Merkmalen des Oberbegriffs von Patentanspruch 1.

Es ist Aufgabe der Erfindung, ein Fördersystem mit Förderabschnitten und ein Verfahren zur Regelung von Antrieben von Förderabschnitten des Fördersystems der eingangs genannten Art zu schaffen, welche die oben genannten Nachteile behebt.

Diese Aufgabe lösen ein Fördersystem mit Förderabschnitten und ein Verfahren zur Regelung von Antrieben von Förderabschnitten des Fördersystems mit den Merkmalen der entsprechenden unabhängigen Patentansprüche.

Das **Fördersystem** weist mindestens einen ersten Förderabschnitt und einen zweiten Förderabschnitt auf, wobei die beiden Förderabschnitte jeweils durch einen eigenen Antrieb angetrieben sind. Das Fördersystem weist mindestens eine Regelungseinheit zur Regelung eines geregelten Antriebs eines der beiden Förderabschnitte auf, wobei diese Regelungseinheit aufweist:
- eine Messvorrichtung zur Messung einer Belastung des Fördersystems in einem Kopplungsbereich zwischen den beiden Förderabschntten;
- und eine Regelvorrichtung zur Regelung des geregelten Antriebs nach Massgabe der gemessenen Belastung.

Damit ist es möglich, eine jeweils lokale Regelung eines Förderabschnittes zu realisieren. Durch die lokale Belastungsmessung ist es nicht notwendig, besondere Informationen über geförderte Güter und deren Position entlang der Förderstrecke zu haben. Ferner wird eine übergeordnete Steuerung oder Regelung zur Abstimmung aller Antriebe hinfällig oder zumindest vereinfacht.

In einer Ausführungsform entspricht die Belastung einem zwischen den Förderabschnitten übertragenen Drehmoment und/oder einer zwischen den Förderabschnitten übertragenen Kraft und/oder einer zwischen den Förderabschnitten übertragenen mechanischen Arbeit oder mechanischen Leistung.

In einer Ausführungsform sind die beiden Förderabschnitte Abschnitte eines Förderers, in welchem ein Förderorgan durch beide Förderabschnitte läuft, wobei der Kopplungsbereich zwischen den beiden Förderabschnitten liegt, und wobei in Förderrichtung gesehen entweder
- der geregelte Antrieb am Ende eines Förderabschnittes und zum Ziehen des Förderorgans durch diesen Förderabschnitt angeordnet ist, und der Kopplungsbereich mit der Messvorrichtung am Anfang dieses Förderabschnittes angeordnet ist; oder
- der geregelte Antrieb am Anfang eines Förderabschnittes und zum Stossen des Förderorgans durch diesen Förderabschnitt angeordnet ist, und der Kopplungsbereich mit der Messvorrichtung am Ende dieses Förderabschnittes angeordnet ist.

In einer Ausführungsform sind die beiden Förderabschnitte Abschnitte eines Förderers, in welchem ein Förderorgan durch beide Förderabschnitte läuft, wobei der Kopplungsbereich zwischen den beiden Förderabschnitten liegt, und wobei in Förderrichtung gesehen entweder
- der geregelte Antrieb am Ende eines Förderabschnittes und zum Ziehen des Förderorgans durch diesen Förderabschnitt angeordnet ist, und der Kopplungsbereich mit der Messvorrichtung am Anfang des nachfolgenden Förderabschnittes angeordnet ist; oder
- der geregelte Antrieb am Anfang eines Förderabschnittes und zum Stossen des Förderorgans durch diesen Förderabschnitt angeordnet ist, und der Kopplungsbereich mit der Messvorrichtung am Ende des vorangehenden Förderabschnittes angeordnet ist.

Das Förderorgan ist vorzugsweise umlaufend. Das Förderorgan kann als Zugmittel eine Kette oder ein Seil aufweisen. Das Zugmittel kann selber ein Fördermittel sein, beispielsweise ein Gurt oder ein Förderband. Das Förderorgan kann als Förderelemente oder Förderglieder beispielsweise Plattenelemente, Mattenelemente oder Greifer aufweisen. Solche Förderelemente können auch miteinander verkettet sein, also ohne ein zusätzliches Zugmittel.

Für einen Förderer oder in einem Förderabschnitt, in welchem das Förderorgan mindestens hauptsächlich gezogen wird, gilt: Als Anfang eines Förderabschnittes kann ein Ort oder ein Bereich nach einer Krafteinleitung durch einen vorangehenden Antrieb betrachtet werden. Als Ende eines Förderabschnittes kann ein Ort oder ein Bereich nach der Krafteinleitung durch den Antrieb des Förderabschnitts betrachtet werden.

Für einen Förderer oder in einem Förderabschnitt, in welchem das Förderorgan mindestens hauptsächlich gestossen wird, gilt: Als Anfang eines Förderabschnittes kann ein Ort oder ein Bereich vor der Krafteinleitung durch den Antrieb des Förderabschnitts betrachtet werden. Als Ende kann ein Ort oder ein Bereich vor einer Krafteinleitung durch einen nachfolgenden Antrieb betrachtet werden.

Die genannten Bereiche vor respektive nach einer Krafteinleitung können jeweils unmittelbar vor respektive nach der Krafteinleitung liegen.

In einer Ausführungsform sind die beiden Förderabschnitte separat umlaufende Förderer. Es weist somit das Fördersystem gemäss dieser Ausführungsform als Förderabschnitte mindestens einen ersten Förderer und einen zweiten Förderer auf, wobei die beiden Förderer dazu eingerichtet sind, einen Strom von Produkten vom ersten zum zweiten Förderer oder vom zweiten zum ersten Förderer zu übergeben. Dabei ist der zweite Förderer durch mindestens einen zweiten Antrieb angetrieben. Das Fördersystem weist als Regelungseinheit eine Synchronisationseinrichtung zur Synchronisation der Bewegung der beiden Förderer auf, welche mindestens den zweiten Antrieb regelt. Diese Synchronisationseinrichtung wiederum weist auf:
- eine mechanische Koppeleinrichtung zwischen den beiden Förderern welche die Bewegung der beiden Förderer aneinander koppelt;
- eine Vorrichtung zur Messung einer Belastung der Koppeleinrichtung;
- und eine Regelvorrichtung zur Regelung des zweiten Antriebs nach Massgabe der gemessenen Belastung der Koppeleinrichtung

Die Regelvorrichtung ist beispielsweise dazu ausgebildet, eine Antriebskraft oder ein Antriebsmoment des zweiten Antriebs nach Massgabe der gemessenen Belastung zu regeln.

Es sind auch mehrere zweite Förderer in der gleichen Weise mit dem ersten Förderer synchronisierbar. Die Synchronisation der beiden Förderer kann also jeweils lokal über die jeweilige Kopplung und Regelung geschehen.

In einer Ausführungsform sind die beiden Förderer dazu eingerichtet, die Produkte getaktet und phasensynchron zu fördern. "Phasensynchron" oder auch "taktsynchron" bedeutet, dass eine Phasenverschiebung zwischen den beiden Förderern respektive deren Bewegung zumindest annähernd konstant gehalten wird.

In einer Ausführungsform ist die Regelvorrichtung dazu eingerichtet, die Belastung auf einen vorgegebenen Sollwert zu regeln. Der Sollwert kann konstant sein. Der Sollwert kann dabei insbesondere von Null verschieden sein. Die Regelung führt entsprechend dem Vorzeichen des Sollwertes dazu, dass jeweils ein nachfolgender Förderabschnitt insbesondere Förderer dem ihm vorangehenden Förderabschnitt insbesondere Förderer ständig nacheilt, also dem vorangehenden Förderabschnitt insbesondere Förderer dauernd eine kleine Antriebsleistung entnimmt, oder umgekehrt der nachfolgende Förderabschnitt insbesondere Förderer dem vorangehenden Förderabschnitt insbesondere Förderer ständig voreilt, also dem vorangehenden Förderabschnitt insbesondere Förderer dauernd eine kleine Antriebsleistung abgibt.

In einer Ausführungsform sind die Förderer dazu ausgelegt, Stückgüter, insbesondere vereinzelte Stückgüter zu fördern. Dies können flexible flächige Produkte sein, insbesondere Druckereiprodukte. Die Produkte oder Stückgüter können verpackt oder unverpackt sein, und/oder in Gebinden zusammengefasst sein.

In einer Ausführungsform ist mindestens einer der Förderer ein Greiferförderer, ein Hakenförderer, ein Hängeförderer, ein Plattenförderer, ein Nockenförderer, ein Förderer mit Gelenkketten, ein Förderband, ein Förderriemen, ein Taschenförderer, eine Mattenkette, eine Sammelvorrichtung, eine Einsteckvorrichtung oder eine Vorrichtung zum Zusammentragen von Produkten.

Ein solcher Förderer kann auch als Wendelförderer, also mit einem zumindest abschnittweise wendelförmigen Verlauf der Förderstrecke, realisiert sein.

Beim Verfahren zur Regelung zweier Förderabschnitte eines Fördersystems sind die beiden Förderabschnitte jeweils durch einen eigenen Antrieb angetrieben. Dabei führt eine Regelungseinheit zur Regelung eines geregelten Antriebs eines der beiden Förderabschnitte die folgenden Schritte aus:
- Messung einer Belastung des Fördersystems in einem Kopplungsbereich zwischen den beiden Förderabschnitten; und
- Regelung des geregelten Antriebs nach Massgabe der gemessenen Belastung.

Dabei entspricht beispielsweise die Belastung einem zwischen den Förderabschnitten übertragenen Drehmoment und/oder einer zwischen den Förderabschnitten übertragenen Kraft und/oder einer zwischen den Förderabschnitten übertragenen mechanischen Arbeit oder mechanischen Leistung. Die Belastung ist insbesondere proportional zu einer solchen Kraft, Arbeit oder Leistung. Eine übertragene Kraft kann einer Zugkraft respektive einer Zugspannung oder einer Druckkraft respektive einer Druckspannung entsprechen.

Gemäss einer Variante des Verfahrens sind die beiden Förderabschnitte Abschnitte eines Förderers, in welchem ein Förderorgan durch beide Förderabschnitte läuft, wobei der Kopplungsbereich zwischen den beiden Förderabschnitten liegt, wobei zur Regelung eines einzelnen geregelten Antriebs entweder
- der geregelte Antrieb am Ende eines Förderabschnittes angeordnet ist, und nach Massgabe der gemessenen Belastung am Anfang dieses Förderabschnittes geregelt wird; oder
- der geregelte Antrieb am Anfang eines Förderabschnittes angeordnet ist, und nach Massgabe der gemessenen Belastung am Ende dieses Förderabschnittes geregelt wird.

Gemäss einer Variante des Verfahrens sind die beiden Förderabschnitte Abschnitte eines Förderers, in welchem ein Förderorgan durch beide Förderabschnitte läuft, wobei der Kopplungsbereich zwischen den beiden Förderabschnitten liegt, wobei zur Regelung eines einzelnen geregelten Antriebs entweder
- der geregelte Antrieb am Ende eines Förderabschnittes angeordnet ist, und nach Massgabe der gemessenen Belastung am Anfang des nachfolgenden Förderabschnittes geregelt wird; oder
- der geregelte Antrieb am Anfang eines Förderabschnittes angeordnet ist, und nach Massgabe der gemessenen Belastung am Ende des vorangehenden Förderabschnittes geregelt wird.

Gemäss einer Variante des Verfahrens werden in mehreren Förderabschnitten des Förderers die Antriebe jeweils mit einem lokalen Regelkreis nach Massgabe der gemessenen Belastung im jeweiligen Förderabschnitt oder einem angrenzenden Förderabschnitt geregelt. Ein angrenzender Förderabschnitt ist ein vorangehender oder ein nachfolgender Förderabschnitt.

Gemäss einem Aspekt der Erfindung dient das Verfahren zur Synchronisation zweier Förderer in einem Fördersystem mit mindestens einem ersten Förderer und einem zweiten Förderer. Dabei sind die beiden Förderer dazu eingerichtet, einen Strom von Produkten vom ersten zum zweiten Förderer oder vom zweiten zum ersten Förderer zu übergeben, wobei der zweite Förderer durch mindestens einen zweiten Antrieb angetrieben ist. Dabei führt eine Synchronisationseinrichtung zur Synchronisation der Bewegung der beiden Förderer die folgenden Schritte aus:
- Messung einer Belastung einer Koppeleinrichtung zwischen den beiden Förderern welche die Bewegung der beiden Förderer aneinander koppelt; und
- Regelung des zweiten Antriebs nach Massgabe der gemessenen Belastung.

In einer Variante des Verfahrens wird der Sollwert in Abhängigkeit von einer Gesamtbelastung des ersten Förderers oder des zweiten Förderers eingestellt. Die Gesamtbelastung variiert entsprechend dem Gewicht und der Anzahl der geförderten Produkte und entspricht der mittels den ersten Antrieb dem ersten Förderer zugeführten Antriebsleistung respektive der Antriebskraft oder dem Antriebsmoment. Vergrössert sich die Belastung, so wird beispielsweise auch der Absolutwert des Sollwerts vergrössert, insbesondere proportional zur Belastung.

Der Sollwert kann konstant sein. Der Sollwert kann dabei insbesondere von Null verschieden sein. In einer Variante des Verfahrens wird der Sollwert in Abhängigkeit einer Fördergeschwindigkeit des ersten Förderers eingestellt.

In einer Variante des Verfahrens wird der Sollwert in einer transienten Phase des Betriebs des Fördersystem variiert, insbesondere mit einem mindestens annähernd rampenförmigen Verlauf. Eine solcher rampenförmige Verlauf kann synchron zu einem Hochlaufen der Fördergeschwindigkeit realisiert werden, und/oder synchron zu einem Befüllen der Förderer mit Produkten, wobei sich die Gesamtbelastung erhöht.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: ein Fördersystem mit mehreren Antrieben und dazwischen liegenden Förderabschnitten;
- Figuren 2-4: Ausschnitte aus einem Fördersystem mit unterschiedlichen Strukturen von Messanordnungen und Regelkreisen; und
- Figur 5: ein Fördersystem mit zwei Förderern und einem Übergabeförderer, welcher mit mindestens einem der beiden Förderer synchronisiert ist.

Grundsätzlich sind in den Figuren gleiche oder gleich geartete Teile mit gleichen Bezugszeichen versehen.

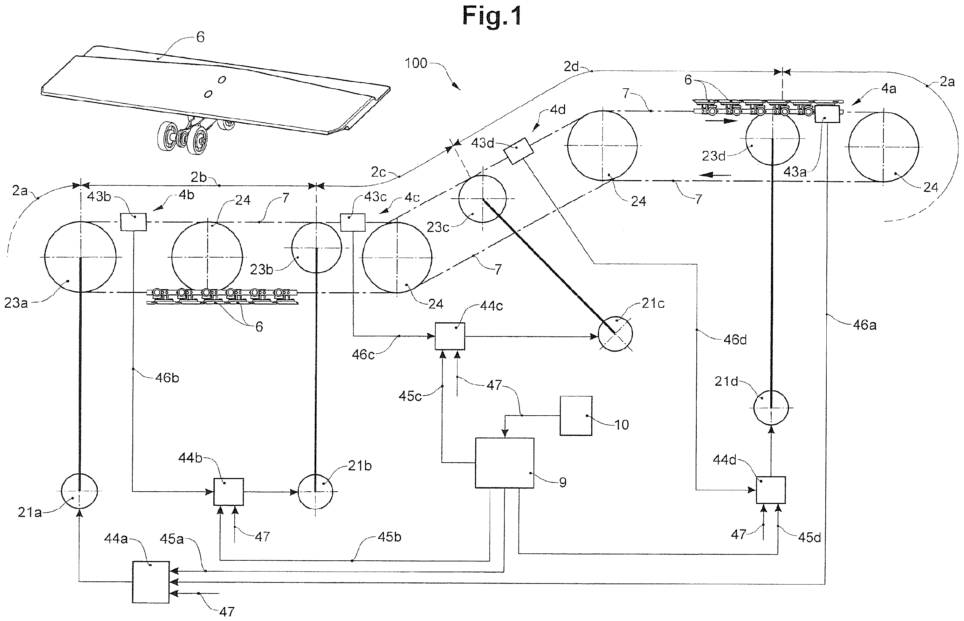

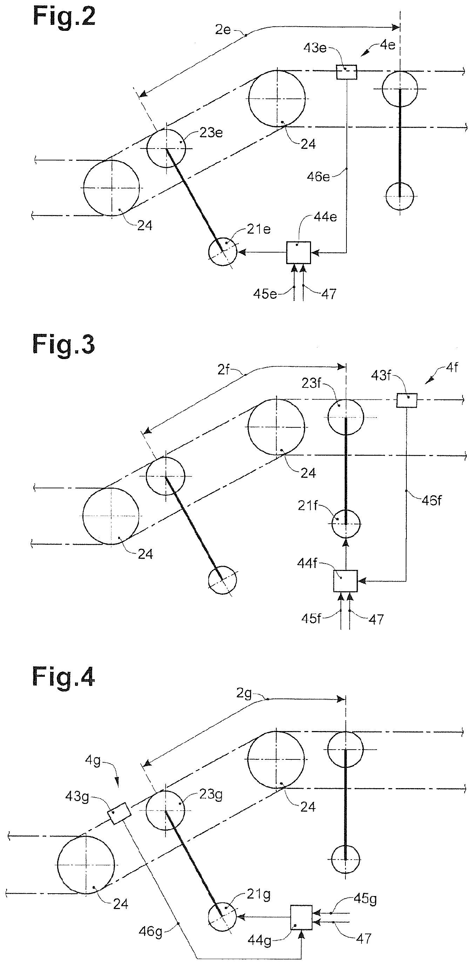

**Figur 1** zeigt ein Fördersystem 100 mit einem umlaufenden Förderorgan 7, welches von mehreren Antrieben 21a, 21b, 21c, 21d angetrieben ist, wodurch zwischen den Antrieben liegende Förderabschnitte 2a, 2b, 2c, 2d definiert sind. Das Förderorgan 7 ist ein umlaufendes Förderorgan mit beispielhaft Plattenelementen 6 als Förderglieder, die miteinander verkettet sind, oder mittels eines Zugmittels gezogen sind. Das Förderorgan 7 läuft, durch mitlaufende, nicht angetriebene Rollen 24, worunter auch Umlenkrollen sind, geführt um seine Umlaufbahn (deren Verlauf mit strichlierten Linien schematisch dargestellt ist). An mehreren Stellen der Umlaufbahn sind Vorrichtungen zur Krafteinleitung 23a, 23b, 23c, 23d angeordnet, welche das Förderorgan antreiben. Dies sind beispielsweise Zahnräder oder Nockenräder. Sie wirken beispielsweise in einem Umlenkantrieb oder in einem Schleppantrieb. Diese Krafteinleitungen 23a, 23b, 23c, 23d sind jeweils durch Antriebe 21 a, 21b, 21c, 21 d angetrieben. Die Antriebe 21 a, 21b, 21c, 21 d sind beispielsweise Elektromotoren, insbesondere Asynchronmotoren. Durch die Anordnung der Krafteinleitungen 23a, 23b, 23c, 23d ist die Umlaufbahn des Förderorgans 7 in mehrere Förderabschnitte 2a, 2b, 2c, 2d unterteilt, wobei auch ein Rücktrum 2a als Förderabschnitt betrachtet werden kann. Jedem Förderabschnitt 2a, 2b, 2c, 2d kann ein Antrieb 21a, 21b, 21c, 21d zugeordnet sein. Der jeweils zugeordnete Antrieb 21 a, 21b, 21c, 21 d treibt das Förderorgan in diesem Förderabschnitt 2a, 2b, 2c, 2d über eine zugeordnete Krafteinleitung 23a, 23b, 23c, 23d an. In Bereichen, in welchen das Förderorgan 7 durch die Antriebe gezogen wird, erstreckt sich ein Förderabschnitt 2a, 2b, 2c, 2d jeweils von einer zugeordneten Krafteinleitung 23a, 23b, 23c, 23d ausgehend entgegen der Förderrichtung bis zu einem Kopplungsbereich 4a, 4b, 4c, 4d, welcher unmittelbar nach der vorangehenden Krafteinleitung 23a, 23b, 23c, 23d liegt. In Bereichen, in welchen das Förderorgan 7 durch die Antriebe gestossen oder geschoben wird (in Figur 2 nicht dargestellt), erstreckt sich ein Förderabschnitt jeweils von einer zugeordneten Krafteinleitung ausgehend in Richtung der Förderrichtung bis zu einem Kopplungsbereich, welcher unmittelbar vor der nachfolgenden Krafteinleitung liegt. Der Kopplungsbereich 4a, 4b, 4c, 4d ist also jeweils der Bereich, in welchem ein Förderabschnitt 2a, 2b, 2c, 2d an den nachfolgenden oder vorangehenden Förderabschnitt 2a, 2b, 2c, 2d grenzt. In Bereichen, wo ein Antrieb in einem ersten Förderabschnitt zieht und in einem nachfolgenden Förderabschnitt stösst oder schiebt, ist der Antrieb beiden Förderabschnitten zugeordnet.

Zur Regelung des Antriebs jeweils eines Förderabschnittes 2a, 2b, 2c, 2d ist eine Messvorrichtung 43a, 43b, 43c, 43d angeordnet. Diese misst eine Belastung des Fördersystems
- in Abschnitten, in welchen das Förderorgan 7 gezogen wird, im Kopplungsbereich 4a, 4b, 4c, 4d zu Beginn des Förderabschnittes 2a, 2b, 2c, 2d, zwischen dem Förderabschnitt 2a, 2b, 2c, 2d und dem vorangehenden Förderabschnitt; oder,
- in Abschnitten, in welchen das Förderorgan 7 geschoben wird, im Kopplungsbereich am Ende des Förderabschnittes, zwischen dem Förderabschnitt und dem nachfolgenden Förderabschnitt.

Die Messvorrichtung 43a, 43b, 43c, 43d erzeugt ein Messsignal 46a, 46b, 46c, 46d, welches einer Belastung des Fördersystems im Kopplungsbereich 4a, 4b, 4c, 4d entspricht, beispielsweise einer zum Antrieb des Förderorgans 7 wirkenden Zugspannung oder Druckspannung. Die Messung selber kann mit an sich bekannten Mitteln geschehen, beispielsweise durch Messung einer Kraft zum Auslenken des Förderorgans 7, oder mittels Sensoren, die mit dem Förderorgan 7 umlaufen und die Zug- oder Druckspannung im Förderorgan erfassen, und deren Messwerte jeweils im Kopplungsbereich 4a, 4b, 4c, 4d ausgelesen werden können und dadurch das Messsignal 46a, 46b, 46c, 46d bilden.

Eine jeweils einem Förderabschnitt 2a, 2b, 2c, 2d zugeordnete Regelvorrichtung 44a, 44b, 44c, 44d verarbeitet das dem Förderabschnitt 2a, 2b, 2c, 2d zugeordnete Messsignal 46a, 46b, 46c, 46d und regelt den zugeordneten Antrieb 21a, 21b, 21c, 21d.

Die Regelvorrichtung 44a, 44b, 44c, 44d kann einen Gesamtsollwert als Vorsteuerungssignal 47 verarbeiten. Der Gesamtsollwert kann für alle Regelvorrichtungen 44a, 44b, 44c, 44d des Fördersystems derselbe sein. Der Gesamtsollwert kann durch eine übergeordnete Steuerung 10 vorgegeben sein. Der Gesamtsollwert kann ein Sollwert für einen Takt, eine Frequenz oder eine Geschwindigkeit des Fördersystems als Ganzes sein.

Die Regelvorrichtung 44a, 44b, 44c, 44d kann einen Belastungssollwert für die jeweilige Belastung, im Folgenden einfach Sollwert 45a, 45b, 45c, 45d genannt, verarbeiten. Dieser Sollwert 45a, 45b, 45c, 45d kann durch eine Steuerung 9 des Fördersystems vorgegeben und geändert werden. Der Sollwert 45a, 45b, 45c, 45d kann aber auch als konstante Vorgabe in der Regelvorrichtung 44a, 44b, 44c, 44d gespeichert sein, oder er kann zeitvariabel sein und beispielsweise durch die Regelvorrichtung 44a, 44b, 44c, 44d nach Massgabe einer anderen Vorgabe, beispielsweise des Vorsteuerungssignals 47, modifiziert werden.

**Figuren 2-4** zeigen Ausschnitte aus einem Fördersystem mit unterschiedlichen Strukturen von Messanordnungen und Regelkreisen. Diese Strukturen können miteinander und mit der in Figur 1 gezeigten Struktur kombiniert werden, d.h. es können in einem Fördersystem die verschiedenen Strukturen implementiert werden, indem verschiedene Abschnitte jeweils mit einer anderen Struktur geregelt werden. Dabei soll gewährleistet sein, dass keine Konflikte zwischen den einzelnen Reglern entstehen. Jede der **Figuren 2**-**4** zeigt einen Antrieb 21e-g und eine Krafteinleitung 23e-g zum Antreiben eines Abschnittes 2e-g, einen Kopplungsbereich 4e-g zu einem angrenzenden, d.h. einem vorangehenden oder nachfolgenden Abschnitt, mit einer Messvorrichtung 43e-g zur Erzeugung eines Messsignals 46e-g entsprechend der Belastung in diesem Kopplungsbereich 4e-g. Die Regelung geschieht jeweils mit einer Regelvorrichtung 44e-g anhand des Messsignals 46e-g, einem Sollwert 45e-g und einem Gesamtsollwert 47. Die Strukturen der Figuren 2-4 unterscheiden sich folgendermassen:
- **Figur 2****:** der Antrieb 21e stösst das Fördermittel durch den Förderabschnitt 2e und wird so geregelt, dass die Belastung 46e am Ende des Förderabschnittes 2e, im Kopplungsbereich 4e zum nachfolgenden Förderabschnitt geregelt wird. Im nachfolgenden Förderabschnitt wird das Fördermittel beispielsweise ebenfalls gestossen.
- **Figur 3****:** der Antrieb 21f zieht das Fördermittel durch den Förderabschnitt 2f und wird so geregelt, dass die Belastung 46f am Beginn des nachfolgenden Förderabschnittes, im Kopplungsbereich 4f zum nachfolgenden Förderabschnitt geregelt wird. Im nachfolgenden Förderabschnitt wird das Fördermittel beispielsweise ebenfalls gezogen.
- **Figur 4****:** der Antrieb 21 g stösst das Fördermittel durch den Förderabschnitt 2g und wird so geregelt, dass die Belastung 46g im Kopplungsbereich 4g zum vorangehenden Förderabschnitt geregelt wird. Dieser Kopplungsbereich 4g befindet sich am Ende des vorangehenden Förderabschnitts. Im vorangehenden Förderabschnitt wird das Fördermittel beispielsweise ebenfalls gestossen.

Eine mögliche Funktionsweise der Regelvorrichtungen 44a-g in den oben beschriebenen verschiedenen Strukturen wird im Folgenden anhand einer einzelnen Regelvorrichtung 44c erklärt:
- Anhand des Gesamtsollwerts oder Vorsteuerungssignals 47 gibt die Regelvorrichtung 44c dem Antrieb 21c - entsprechend dem Typ des Gesamtsollwerts - einen Takt, eine Frequenz oder eine Geschwindigkeit vor. Die Regelvorrichtung 44c kann eine unterlagerte Antriebsregelung aufweisen, welche dafür sorgt, dass ein diesem Wert entsprechender Istwert zumindest annähernd erreicht wird. Dazu kann die unterlagerte Regelung eine Messeinrichtung zur Messung dieses Istwertes aufweisen.
- Anhand des Sollwerts 45c und des Wertes des Messsignals 46c modifiziert (d.h. erhöht oder erniedrigt) die Regelvorrichtung 44c die Antriebskraft oder Antriebsleistung oder das Antriebsmoment des Antriebs 21c, um das Messsignal zumindest annähernd auf den Sollwert 45c zu bringen. Alternativ kann die Regelvorrichtung 44c den Gesamtsollwert modifizieren, bevor er dem Antrieb 21c oder einer unterlagerten Antriebsregelung zugeführt wird.

Es können gemäss einer Ausführungsform also die Regler für den Gesamtsollwert, die Belastung der Kette und des Antriebsmomentes eine kaskadierte Regelung bilden.

Die verschiedenen erwähnten Regler können beispielsweise P-Regler, PI-Regler, PID-Regler, Zustandsregler, prädiktive Regler etc. sein.

Eine hardwaremässige analoge oder digitale Implementation der Regler der Regelvorrichtungen 44a-g kann räumlich verteilt sein. Sie kann aber auch zentral in einer gemeinsamen Rechnereinheit geschehen, wobei aber die einzelnen Regelkreise regelungstechnisch voneinander entkoppelt bleiben, d.h. die einzelnen Regelkreise weiterhin jeweils nur einen Förderabschnitts 2a-g lokal regeln.

Gemäss einer anderen möglichen Funktionsweise (nicht illustriert) werden alle oder zumindest mehrere Messsignale 46a-g von verschiedenen Förderabschnitten 2a-g der Steuerung 9 des Fördersystems zugeführt, und regelt die Steuerung 9 des Fördersystems die Antriebe 21a-g unter Optimierung einer Gesamt-Zielfunktion. Die Gesamt-Zielfunktion berücksichtigt sowohl die Abweichung der einzelnen Messsignale 46a-g von entsprechenden Sollwerten 45a-g als auch eine Abweichung der Geschwindigkeit der einzelnen Antriebe 21 a-g oder des Taktes, der Frequenz oder der Geschwindigkeit des Fördersystems von entsprechenden Sollwerten. Dazu kann ein MIMO (Multi-Input Multi-Output) Regelverfahren verwendet werden.

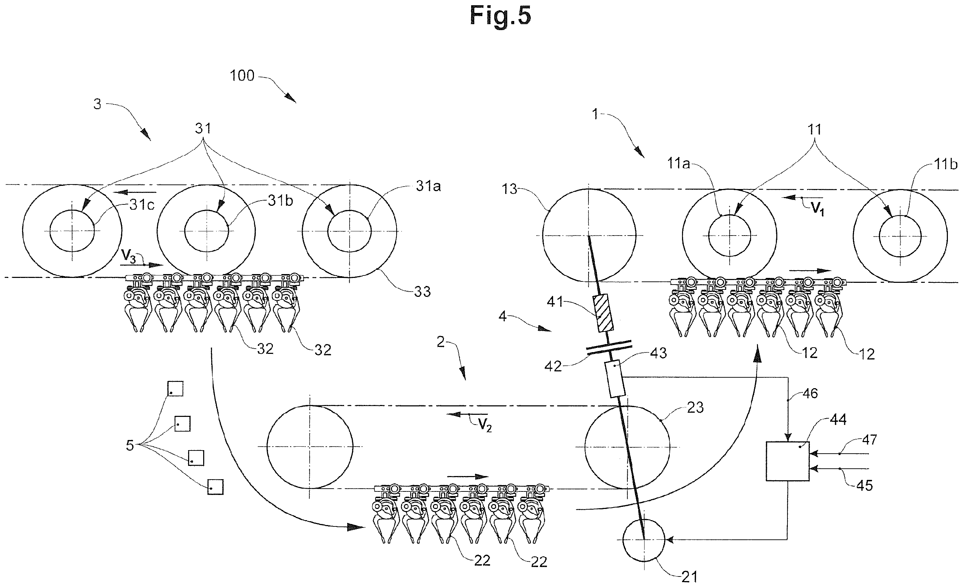

**Figur 5** zeigt ein Fördersystem 100 mit zwei Förderern 1, 3 und einem Übergabeförderer 2, welcher mit mindestens einem der beiden Förderer synchronisiert ist. Die Förderer 1, 2, 3 sind zum Fördern von Stückgut eingerichtet, wobei jeweils ein Produkt von den anderen getrennt, also einzeln gefördert wird. Die Förderer 1, 2, 3 weisen dazu jeweils Greifer 12, 22, 32 auf. Diese können eine Kette von Greifern 12, 22, 32 bilden. Die Greifer 12, 22, 32 respektive entsprechende Ketten sind durch Antriebe 11, 21, 31 angetrieben und bewegen sich im synchronisierten Zustand mit nominellen Fördergeschwindigkeiten v₁, v₂, v₃. Am Ende einer Förderstrecke laufen die Ketten um Umlenkrollen oder Räder 13, 23, 33 um. Im Falle eines ersten Förderers 1 kann ein erster Antrieb 11 durch verteilte Antriebe 11a, 11b, ... welche entlang des Förderers 1 angeordnet sind, realisiert sein. Der Förderer 1 kann sich über eine Förderstrecke bis zu mehreren hundert Metern erstrecken. Dasselbe gilt für den dritten Förderer 3 mit einem Antrieb 31 aus gegebenenfalls mehreren verteilten Antrieben 31a, 31b, 31c. Die Position und die Leistung der Antriebe ist entsprechend dem Verlauf des jeweiligen Förderers ausgelegt.

Zur Übergabe von Produkten 5 vom ersten Förderer 1 zum dritten Förderer 3 oder umgekehrt ist ein Übergabeförderer als zweiter Förderer 2 mit einem oder mehreren zweiten Antrieben 21 und zweiten Greifern 22 angeordnet. Der zweite Förderer 2 übernimmt dazu in bekannter Weise die Produkte 5 von beispielsweise dem dritten Förderer 3 und übergibt sie an den ersten Förderer 1. Die Produkte 5 sind nur schematisch dargestellt, und Produkteströme bei der Übergabe sind durch Pfeile dargestellt.

Der erste Förderer 1 und der dritte Förderer 3 können in bekannter Weise durch eine übergeordnete Steuerung miteinander synchronisiert sein. Der zweite Förderer 2 könnte in derselben Weise synchronisiert sein, jedoch ist zur Vereinfachung der Steuerung eine lokale Synchronisation realisiert. Dies geschieht primär durch eine mechanische Kopplung der Bewegung des zweiten Förderers 2 mit der Bewegung des ersten Förderers 1, beispielsweise über ein Getriebe, Wellen, Ketten etc. Diese Kopplung erzwingt also auf mechanische Weise, dass, wenn die Geschwindigkeit des ersten Förderers 1 ihren Nominalwert aufweist, auch die Geschwindigkeit des zweiten Förderers 2 ihren Nominalwert aufweist. Damit die ersten Antriebe 11 durch die Kopplung nicht belastet werden, weist der zweite Förderer 2 einen eigenen, zweiten Antrieb 21 auf. Falls dieser zweite Antrieb 21 und damit der zweite Förderer 2 zwar mit einer zum ersten Förderer 1 synchronen Geschwindigkeit läuft, aber voreilt oder nacheilt, also einen gewissen Schlupf aufweist, so wird dadurch die Bewegung des ersten Förderers 1 gestört, indem dem ersten Förderer 1 Antriebsenergie entnommen oder zugeführt wird. Daher wird die hier vorgestellte Synchronisationseinrichtung 4, 43, 44 eingesetzt. Diese weist auf:
- eine mechanische Koppeleinrichtung 4 zwischen den beiden Förderern 1, 2, welche die Bewegung der beiden Förderer 1, 2 aneinander koppelt;
- eine Vorrichtung 43 zur Messung einer Belastung der Koppeleinrichtung Kopplung 4;
- und eine Regelvorrichtung 44 zur Regelung des zweiten Antriebs 21 nach Massgabe der gemessenen Belastung der Koppeleinrichtung 4. Die geregelte Grösse des zweiten Antriebs kann -je nachdem, wie eine lokale unterlagerte Antriebsregelung ausgebildet ist - direkt oder indirekt eine auf den zweiten Förderer 2 wirkende Antriebskraft oder ein Antriebsmoment respektive eine Antriebsleistung sein, oder ein Motorstrom, etc.

Die Koppeleinrichtung oder Kopplung 4 kann ein Getriebe und/oder eine Dämpfung 41 aufweisen, sowie eine Kupplung 42 zum Zusammenkoppeln respektive Entkoppeln der Bewegung der beiden Förderer. Die Kupplung 42 kann zum Abkoppeln des zweiten Förderers 2 vom ersten Förderer 1 verwendet werden, beispielsweise bei einem Notstopp, bei einer Störung oder Überlast, oder wenn der zweite Förderer 2 nicht im Einsatz ist.

Die Vorrichtung 43 zur Messung einer Belastung der Koppeleinrichtung realisiert insbesondere eine Drehmomentmessung, sie kann aber auch eine Kraft messen, welche sich nach Massgabe der Belastung der Kopplung 4 ändert. Eine solche Kraft kann beispielsweise eine Kraft sein, die auf eine Umlenkrolle oder auf ein Getriebeelement der Kopplung 4 wirkt. Die gemessene Belastung ist beispielsweise positiv, wenn der zweite Förderer 2 vom ersten Förderer 1 gezogen wird, wenn also dem ersten Förderer 1 Antriebsenergie entzogen wird. Umgekehrt ist sie negativ, wenn der zweite Förderer 2 den ersten Förderer 1 mit antreibt.

Die Regelvorrichtung 44 variiert die Antriebskraft oder die Antriebsleistung des zweiten Antriebs 21, so dass die gemessene Belastung einem Sollwert 45 folgt oder möglichst nahe kommt. Entsprechende Regler sind bekannt, beispielsweise PID-Regler oder Zustandsregler, prädiktive Regler etc. Die Funktionsweise kann im einzelnen so sein, wie oben betreffend die verschiedenen Strukturen ausgeführt ist. Der Regler kann als zusätzlichen Eingang ein Vorsteuersignal 47 entsprechend der Geschwindigkeit oder der Belastung des ersten Förderers 1, oder entsprechend einem Sollwert aus einer Regelung des ersten Förderers 1 aufweisen. Beispielsweise entspricht damit das Vorsteuersignal einem Gesamtsollwert für die Geschwindigkeit des ganzen Fördersystems.

Der Sollwert 45 für die Regelvorrichtung 44 kann konstant sein. Der Sollwert 45 kann insbesondere von Null verschieden sein. Dies gilt insbesondere im stationären Betrieb der Fördereinrichtung. Mit einem von Null verschiedenen Sollwert 45 werden Vorzeichenwechsel in der Abweichung der Belastung vermieden, und dadurch wiederum Unstetigkeiten ("Schläge") im Betrieb des zweiten Antriebs 21. Der Betrag des Sollwertes 45 - im Falle eines Drehmomentes an einer Antriebswelle zwischen den beiden Förderern 1, 2 - ist beispielsweise rund fünf Nm.

## Patentansprüche

1. Fördersystem mit mindestens einem ersten Förderabschnitt (1; 2a-g) und einem zweiten Förderabschnitt (2; 2a-g), wobei die beiden Förderabschnitte (1, 2; 2a-g) jeweils durch einen eigenen Antrieb (11, 21; 21a-g) angetrieben sind,
und das Fördersystem mindestens eine Regelungseinheit zur Regelung eines geregelten Antriebs (21; 21 a-g) eines der beiden Förderabschnitte (2; 2a-g) aufweist, **dadurch gekennzeichnet, dass** diese Regelungseinheit aufweist:
• eine Messvorrichtung (43; 43a-g) zur Messung einer Belastung des Fördersystems in einem Kopplungsbereich (4; 4a-g) zwischen den beiden Förderabschnitten (1, 2; 2a-g);
• und eine Regelvorrichtung (44; 44a-g) zur Regelung des geregelten Antriebs (21; 21a-g) nach Massgabe der gemessenen Belastung (46; 46ag).

2. Fördersystem gemäss Anspruch 1, wobei die Belastung einem zwischen den Förderabschnitten (1, 2; 2a-g) übertragenen Drehmoment und/oder einer zwischen den Förderabschnitten (1, 2; 2a-g) übertragenen Kraft und/oder einer zwischen den Förderabschnitten (1, 2; 2a-g) übertragenen mechanischen Arbeit oder mechanischen Leistung entspricht.

3. Fördersystem gemäss Anspruch 1 oder 2, wobei die beiden Förderabschnitte (2a-e) Abschnitte eines Förderers sind, in welchem ein Förderorgan (7) durch beide Förderabschnitte (2a-e) läuft, wobei der Kopplungsbereich (4a-e) zwischen den beiden Förderabschnitten (2a-e) liegt, und wobei in Förderrichtung gesehen entweder
• der geregelte Antrieb (21a-d) am Ende eines Förderabschnittes (2a-d) und zum Ziehen des Förderorgans (7) durch diesen Förderabschnitt (2a-d) angeordnet ist, und der Kopplungsbereich (4a-d) mit der Messvorrichtung (43a-d) am Anfang dieses Förderabschnittes angeordnet ist; oder
• der geregelte Antrieb (21e) am Anfang eines Förderabschnittes (2e) und zum Stossen des Förderorgans (7) durch diesen Förderabschnitt (2e) angeordnet ist, und der Kopplungsbereich (4e) mit der Messvorrichtung (43e) am Ende dieses Förderabschnittes (2e) angeordnet ist.

4. Fördersystem gemäss Anspruch 1 oder 2, wobei die beiden Förderabschnitte (2f g) Abschnitte eines Förderers sind, in welchem ein Förderorgan (7) durch beide Förderabschnitte (2f-g) läuft, wobei der Kopplungsbereich (4a, 4b, 4c, 4d) zwischen den beiden Förderabschnitten (2f-g) liegt, und wobei in Förderrichtung gesehen entweder
• der geregelte Antrieb (21f) am Ende eines Förderabschnittes (2f) und zum Ziehen des Förderorgans (7) durch diesen Förderabschnitt (21) angeordnet ist, und der Kopplungsbereich (4f) mit der Messvorrichtung (43f) am Anfang des nachfolgenden Förderabschnittes angeordnet ist; oder
• der geregelte Antrieb (21g) am Anfang eines Förderabschnittes (2g) und zum Stossen des Förderorgans (7) durch diesen Förderabschnitt (2g) angeordnet ist, und der Kopplungsbereich (4g) mit der Messvorrichtung (43g) am Ende des vorangehenden Förderabschnittes angeordnet ist.

5. Fördersystem gemäss Anspruch 1 oder 2, wobei die beiden Förderabschnitte separat umlaufende Förderer (1, 2) sind, und die beiden Förderer (1, 2) dazu eingerichtet sind, einen Strom von Produkten (5) von einem ersten Förderer (1) zu einem zweiten Förderer (2) oder vom zweiten zum ersten Förderer zu übergeben, wobei der zweite Förderer (2) durch mindestens den geregelten Antrieb (21) angetrieben ist, und wobei der Kopplungsbereich durch eine mechanische Koppeleinrichtung (4) zwischen den beiden Förderern (1, 2) gebildet ist, welche die Bewegung der beiden Förderer (1, 2) aneinander koppelt, und die Messvorrichtung (43) zur Messung einer Belastung (46) der Koppeleinrichtung (4) ausgebildet ist.

6. Fördersystem gemäss Anspruch 5, wobei die beiden Förderer (1, 2) dazu eingerichtet sind, die Produkte (5) getaktet und phasensynchron zu fördern.

7. Fördersystem gemäss Anspruch 5 oder 6, wobei die Koppeleinrichtung (4) eine Kupplung (42) zum Zusammenkuppeln respektive Entkoppeln der Bewegung der beiden Förderer (1, 2) aufweist.

8. Fördersystem gemäss einem der vorangehenden Ansprüche, wobei die Regelvorrichtung (44; 44a-f) dazu eingerichtet ist, die Belastung auf einen vorgegebenen Sollwert (45; 45a-f) zu regeln.

9. Verfahren zur Regelung zweier Förderabschnitte (1, 2; 2a-g) eines Fördersystems, wobei die beiden Förderabschnitte (1, 2; 2a-g) jeweils durch einen eigenen Antrieb (11, 21; 21a-g) angetrieben sind,
**dadurch gekennzeichnet, dass** eine Regelungseinheit zur Regelung eines geregelten Antriebs (21; 21a-g) eines der beiden Förderabschnitte (1, 2; 2a-g) die folgenden Schritte ausführt:
• Messung einer Belastung des Fördersystems in einem Kopplungsbereich (4; 4a-g) zwischen den beiden Förderabschnitten (1, 2; 2a-g); und
• Regelung des geregelten Antriebs (21; 21a-g) nach Massgabe der gemessenen Belastung (46; 46a-g).

10. Verfahren gemäss Anspruch 9, wobei die Belastung einem zwischen den Förderabschnitten (1, 2; 2a-g) übertragenen Drehmoment und/oder einer zwischen den Förderabschnitten (1, 2; 2a-g) übertragenen Kraft und/oder einer zwischen den Förderabschnitten (1, 2; 2a-g) übertragenen mechanischen Arbeit oder mechanischen Leistung entspricht.

11. Verfahren gemäss Anspruch 9 oder 10, wobei die beiden Förderabschnitte (2a-e) Abschnitte eines Förderers sind, in welchem ein Förderorgan (7) durch beide Förderabschnitte (2a-e) läuft, wobei der Kopplungsbereich (4a-e) zwischen den beiden Förderabschnitten (2a-e) liegt, und zur Regelung eines einzelnen geregelten Antriebs (21a-e) entweder
• der geregelte Antrieb (21a-d) am Ende eines Förderabschnittes (2a-d) angeordnet ist, und nach Massgabe der gemessenen Belastung (46a-d) am Anfang dieses Förderabschnittes (2a-d) geregelt wird; oder
• der geregelte Antrieb (21e) am Anfang eines Förderabschnittes (2e) angeordnet ist, und nach Massgabe der gemessenen Belastung (46e) am Ende dieses Förderabschnittes (2e) geregelt wird.

12. Verfahren gemäss Anspruch 9 oder 10, wobei die beiden Förderabschnitte (2f-g) Abschnitte eines Förderers sind, in welchem ein Förderorgan (7) durch beide Förderabschnitte (2f-g) läuft, wobei der Kopplungsbereich (4f-g) zwischen den beiden Förderabschnitten (2f-g) liegt, und zur Regelung eines einzelnen geregelten Antriebs (21f-g) entweder
• der geregelte Antrieb (21f) am Ende eines Förderabschnittes (2f) angeordnet ist, und nach Massgabe der gemessenen Belastung (46f) am Anfang des nachfolgenden Förderabschnittes geregelt wird; oder
• der geregelte Antrieb (21g) am Anfang eines Förderabschnittes (2g) angeordnet ist, und nach Massgabe der gemessenen Belastung (46g) am Ende des vorangehenden Förderabschnittes geregelt wird.

13. Verfahren gemäss Anspruch 9, wobei in mehreren Förderabschnitten (2a-f) des Förderers die Antriebe (21a-f) jeweils mit einem lokalen Regelkreis nach Massgabe der gemessenen Belastung (46a-f) im jeweiligen Förderabschnitt oder einem angrenzenden Förderabschnitt geregelt werden.

14. Verfahren gemäss Anspruch 9 oder 10, wobei die beiden Förderabschnitte separat umlaufende Förderer (1, 2) sind, und die beiden Förderer (1, 2) einen Strom von Produkten (5) von einem ersten Förderer (1) zu einem zweiten Förderer (2) oder vom zweiten zum ersten Förderer übergeben, wobei der zweite Förderer (2) durch mindestens den geregelten Antrieb (21) angetrieben wird, **dadurch gekennzeichnet, dass** die Regelungseinheit zur Regelung der Bewegung der beiden Förderer (1, 2) die folgenden Schritte ausführt:
• Messung einer Belastung (46) einer mechanischen Koppeleinrichtung (4) zwischen den beiden Förderern (1, 2), welche die Bewegung der beiden Förderer (1, 2) aneinander koppelt; und
• Regelung des geregelten Antriebs (21) nach Massgabe der gemessenen Belastung (46).

15. Verfahren gemäss einem der Ansprüche 9 bis 14, wobei die Belastung auf einen vorgegebenen Sollwert (45; 45a-f) geregelt wird.

16. Verfahren gemäss Anspruch 15, wobei der Sollwert (45; 45a-f) in Abhängigkeit von einer Gesamtbelastung eines der Förderer oder das ganzen Fördersystems eingestellt wird.

17. Verfahren gemäss einem der Ansprüche 15 bis 16, wobei der Sollwert (45; 45a-f) in Abhängigkeit einer Fördergeschwindigkeit des Fördersystems eingestellt wird.

18. Verfahren gemäss einem der Ansprüche 15 bis 17, wobei der Sollwert (45; 45a-f) in einer transienten Phase des Betriebs des Fördersystems variiert wird.

## Claims

1. A conveying system with at least one first conveying section (1; 2a-g) and with a second conveying section (2; 2a-g), wherein the two conveying sections (1, 2; 2a-g) are driven in each case by an individual drive (11, 21; 21a-g),
and the conveying system comprises at least one regulation unit for regulating a regulated drive (21; 21a-g) of one of the two conveying sections (2; 2a-g), **characterised in that** this regulating unit comprises:
• a measuring device (43; 43a-g) for measuring a loading of the conveying system in a coupling region (4; 4a-g) between the two conveying sections (1, 2; 2a-g);
• and a regulating device (44; 44a-g) for regulating the regulated drive (21; 21a-g) in accordance with the measured loading (46; 46a-g).

2. A conveying system according to claim 1, wherein the loading corresponds to a torque transmitted between the conveying sections (1, 2; 2a-g) and/or to a force transmitted between the conveying sections (1, 2; 2a-g) and/or to a mechanical work or mechanical power, which is transmitted between the conveying sections (1, 2; 2a-g).

3. A conveying system according to claim 1 or 2, wherein the two conveying sections (2a-e) are sections of a conveyor, in which a conveying element (7) runs through both conveying sections (2a-e), wherein the coupling region (4a-e) lies between the two conveying sections (2a-e) and wherein seen in the conveying direction either:
• the regulated drive (2a-d) is arranged at the end of a conveying section (2a-d) and is for pulling the conveying element (7) through this conveying section (2a-d), and the coupling region (4a-d) with the measuring device (43a-d) is arranged at the beginning of this conveying section; or
• the regulated drive (21e) is arranged at the beginning of a conveying section (2e) and is for pushing the conveying element (7) through this conveying section (2e), and the coupling region (4e) with the measuring device (43e) is arranged at the end of this conveying section (2e).

4. A conveying system according to claim 1 or 2, wherein the two conveying sections (2f-g) are sections of a conveyor, in which a conveying element (7) runs through both conveying sections (2f-g), wherein the coupling region (4a, 4b, 4c, 4d) lies between the two conveying sections (2f-g) and wherein, seen in the conveying direction, either
• the regulated drive (21f) is arranged at the end of a conveying section (2f) and is for pulling the conveying element (7) through this conveying section (2f), and the coupling region (4f) with the measuring device (43f) is arranged at the beginning of the subsequent conveying section; or
• the regulated drive (21) is arranged at the beginning of a conveying section (2g) and is for pushing the conveying element (7) through this conveying section (2g), and the coupling region (4g) with the measuring device (43g) is arranged at the end of the preceding conveying section.

5. A conveying system according to claim 1 or 2, wherein the two conveying sections are separately circulating conveyors (1, 2), and the two conveyors (1, 2) are configured to transfer a stream of products (5) from a first conveyor (1) to a second conveyor (2) or from the second to the first conveyor, wherein the second conveyor (2) is driven by at least the regulated drive (21), and wherein the coupling region is formed by a mechanical coupling device (4) between the two conveyors (1, 2), which couples the movement of the two conveyors (1, 2) to one another, and the measuring device (43) is designed for measuring a loading (46) of the coupling device (4).

6. A conveying system according to claim 5, wherein the two conveyors (1, 2) are configured to convey the products (5) in a clocked and phase-synchronous manner.

7. A conveying system according to claim 5 or 6, wherein the coupling device (4) comprises a clutch (42) for the coupling together or decoupling the movement of the two conveyors (1, 2).

8. A conveying system according to one of the preceding claims, wherein the control device (44; 44a-f) is configured to regulate the loading to a predefined reference value (45; 45a-f).

9. A method for regulating two conveying sections (1, 2; 2a-g) of a conveying system, wherein the two conveying sections (1, 2; 2a-g) are driven in each case by an individual drive (11, 21; 21a-g),
**characterised in that** a regulating unit for regulating a regulated drive (21; 21a-g) of one of the two conveying sections (1, 2; 2a-g) carries out the following steps:
• measuring a loading of the conveying system in a coupling region (4; 4a-g) between the two conveying sections (1, 2; 2a-g); and
• regulating the regulated drive (21; 21a-g) in accordance with the measured loading (46; 46a-g).

10. A method according to claim 9, wherein the loading corresponds to a torque transmitted between the conveying sections (1, 2; 2a-g) and/or to a force transmitted between the conveying sections (1, 2; 2a-g) and/or to a mechanical work or mechanical power transmitted between the conveying sections (1, 2; 2a-g).

11. A method according to claim 9 or 10, wherein the two conveying sections (2a-e) are sections of a conveyor, in which a conveying element (7) runs through both conveying sections (2a-e), wherein the coupling region (4a-e) lies between the two conveying sections (2a-e), and for the regulation of an individual regulated drive (2a-e) either
• the regulated drive (21a-d) is arranged at the end of a conveying section (2a-d), and is regulated in accordance with the measured loading (46a-d) at the beginning of this conveying section (2a-d); or
• the regulated drive (21e) is arranged at the beginning of a conveying section (2e), and is regulated in accordance with the measured loading (46e) at the end of this conveying section (2e).

12. A method according to claim 9 or 10, wherein the two conveying sections (2f-g) are sections of a conveyor, in which a conveying element (7) runs through both conveying sections (2f-g), wherein the coupling region (4f-g) lies between the two conveying sections (2f-g), and for regulating an individual regulated drive (21f-g) either
• the regulated drive (21f) is arranged at the end of a conveying section (2f), and is regulated in accordance with the measured loading (46f) at the beginning of the subsequent conveying section; or
• the regulated drive (21g) is arranged at the beginning of a conveying section (2g), and is regulated in accordance with the measured loading (46g) at the end of the preceding conveying section.

13. A method according to claim 9, wherein in several conveying sections (2a-f) of the conveyor, the drives (21a-f) are each regulated with a local control loop in accordance with the measured loading (46a-f) in the respective conveying section or an adjacent conveying section.

14. A method according to claim 9 or 10, wherein the two conveying sections are separately circulating conveyors (1, 2), and the two conveyors (1, 2) transfer a stream of products (5) from a first conveyor (1) to a second conveyor (2) or from the second to the first conveyor, wherein the second conveyor (2) is driven by at least the regulated drive (21),
**characterised in that** the regulation unit for regulating the movement of the two conveyors (1, 2) carries out the following steps:
• measuring a loading (46) of a mechanical coupling device (4) between the two conveyors (1, 2), which coupling device (4) couples the movement of the two conveyors (1, 2) to one another; and
• regulating the regulated drive (21) in accordance with the measured loading (46).

15. A method according to one of the claims 9 to 14, wherein the loading is regulated to a predefined reference value (45; 45a-f).

16. A method according to claim 15, wherein the reference value (45; 45a-f) is set in dependence on a total loading of one of the conveyors or of the complete conveying system.

17. A method according to one of the claims 15 to 16, **characterised in that** the reference value (45; 45a-f) is set in dependence on a conveying speed of the conveying system.

18. A method according to one of the claims 15 to 17, wherein the reference value (45; 45a-f) is varied in a transient phase of the operation of the conveying system.

## Revendications

1. Système de transport présentant
au moins une première section de transport (1; 2a-g) et une deuxième section de transport (2; 2a-g), les deux sections de transport (1, 2; 2a-g) étant chacune entraînée par son propre entraînement (11, 21; 21a-g),
le système de transport présentant au moins une unité de régulation qui régule un entraînement régulé (21; 21a-g) de l'une des deux sections de transport (2; 2a-g) ,
**caractérisé en ce que** cette unité de régulation présente
un dispositif de mesure (43; 43a-g) qui mesure une charge du système de transport dans une partie d'accouplement (4; 4a-g) située entre les deux sections de transport (1, 2; 2a-g) et
un dispositif de régulation (44; 44a-g) qui régule l'entraînement régulé (21; 21a-g) en fonction de la charge (46; 46a-g) qui a été mesurée.

2. Système de transport selon la revendication 1, dans lequel la charge correspond à un couple de rotation transmis entre les deux sections de transport (1, 2; 2a-g) et/ou à une force transmise entre les deux sections de transport (1, 2; 2a-g) et/ou à un travail ou une puissance mécaniques transmis entre les deux sections de transport (1, 2; 2a-g).

3. Système de transport selon les revendications 1 ou 2, dans lequel les deux sections de transport (2a-e) sont des sections d'un transporteur dans lequel un organe de transport (7) traverse les deux sections de transport (2a-e), la partie d'accouplement (4a-e) étant située entre les deux sections de transport (2a-e), et dans lequel :
l'entraînement régulé (21a-d) est disposé dans la direction du transport à la fin d'une section de transport (2a-d) et sert à tirer l'organe de transport (7) dans cette section de transport (2a-d) et la partie d'accouplement (4a-d) présentant le dispositif de mesure (43a-d) est disposée au début de cette section de transport dans la direction du transport ou
l'entraînement régulé (21e) est disposé dans la direction du transport au début d'une section de transport (2e) et sert à pousser l'organe de transport (7) dans cette section de transport (2e) et la partie d'accouplement (4e) qui présente le dispositif de mesure (43e) est disposée à la fin de cette section de transport (2e) dans la direction du transport.

4. Système de transport selon les revendications 1 ou 2, dans lequel les deux sections de transport (2f-g) sont des sections d'un transporteur dans lequel un organe de transport (7) se déplace dans les deux sections de transport (2f-g), la partie d'accouplement (4a, 4b, 4c, 4d) étant disposée entre les deux sections de transport (2f-g) et dans lequel :
l'entraînement régulé (21f) est disposé dans la direction de transport à la fin d'une section de transport (2f) et sert à tirer l'organe de transport (7) dans cette section de transport (2f) et la partie d'accouplement (4f) qui présente le dispositif de mesure (43f) est disposée au début de la section de transport suivante dans la direction de transport ou
l'entraînement régulé (21g) est disposé dans la direction de transport au début d'une section de transport (2g) et sert à pousser l'organe de transport (7) dans cette section de transport (2g), la partie d'accouplement (4g) qui présente le dispositif de mesure (43g) étant disposée à la fin de la section de transport précédente dans la direction de transport.

5. Système de transport selon les revendications 1 ou 2, dans lequel les deux sections de transport sont des transporteurs circulants (1, 2) séparés, les deux transporteurs (1, 2) étant conçus pour transférer un flux de produits (5) d'un premier transporteur (1) à un deuxième transporteur (2) ou du deuxième transporteur au premier transporteur, les deux transporteurs (2) étant entraînés au moins par l'entraînement régulé (21), la partie d'accouplement étant formée par un dispositif mécanique d'accouplement (4) disposé entre les deux transporteurs (1, 2) et accouplant l'un à l'autre le déplacement des deux transporteurs (1, 2), le dispositif de mesure (43) étant configuré pour mesurer la charge (46) du dispositif d'accouplement (4).

6. Système de transport selon la revendication 5, dans lequel les deux transporteurs (1, 2) sont conçus pour transporter les produits (5) de manière cadencée et en synchronisme de phase.

7. Système de transport selon les revendications 5 ou 6, dans lequel le dispositif d'accouplement (4) présente un accouplement (42) qui couple ou découple le déplacement des deux transporteurs (1, 2).

8. Système de transport selon l'une des revendications précédentes, dans lequel le dispositif de régulation (44; 44a-f) est conçu pour réguler la charge à une valeur de consigne (45; 45a-f) prédéterminée.

9. Procédé de régulation de deux sections de transport (1, 2; 2a-g) d'un système de transport, dans lequel les deux sections de transport (1, 2; 2a-g) sont chacune entraînée par leur propre entraînement (11, 21; 21a-g), **caractérisé en ce qu'**une unité de régulation qui régule un entraînement régulé (21; 21a-g) de section de transport (1, 2; 2a-g) exécute les étapes suivante :
mesure d'une charge du système de transport dans une partie d'accouplement (4; 4a-g) située entre les deux sections de transport (1, 2; 2a-g) et
régulation de l'entraînement régulé (21; 21a-g) en fonction la charge (46; 46a-g) qui a été mesurée.

10. Procédé selon la revendication 9, dans lequel la charge correspond à un couple de rotation transmis entre les deux sections de transport (1, 2; 2a-g) et/ou à une force transmise entre les deux sections de transport (1, 2; 2a-g) et/ou à un travail ou une puissance mécaniques transmis entre les deux sections de transport (1, 2; 2a-g).

11. Procédé selon les revendications 9 ou 10, dans lequel les deux sections de transport (2a-e) sont des sections d'un transporteur dans lequel un organe de transport (7) traverse les deux sections de transport (2a-e), la partie d'accouplement (4a-e) étant située entre les deux sections de transport (2a-e), et dans lequel :
l'entraînement régulé (21a-d) est disposé dans la direction du transport à la fin d'une section de transport (2a-d) et sert à tirer l'organe de transport (7) dans cette section de transport (2a-d) et la partie d'accouplement (4a-d) présentant le dispositif de mesure (43a-d) est disposée au début de cette section de transport dans la direction du transport ou
l'entraînement régulé (21e) est disposé dans la direction du transport au début d'une section de transport (2e) et sert à pousser l'organe de transport (7) dans cette section de transport (2e) et la partie d'accouplement (4e) qui présente le dispositif de mesure (43e) est disposée à la fin de cette section de transport (2e) dans la direction du transport.

12. Procédé selon les revendications 9 ou 10, dans lequel les deux sections de transport (2f-g) sont des sections d'un transporteur dans lequel un organe de transport (7) se déplace dans les deux sections de transport (2f-g), la partie d'accouplement (4a, 4b, 4c, 4d) étant disposée entre les deux sections de transport (2f-g) et dans lequel :
l'entraînement régulé (21f) est disposé dans la direction de transport à la fin d'une section de transport (2f) et sert à tirer l'organe de transport (7) dans cette section de transport (2f) et la partie d'accouplement (4f) qui présente le dispositif de mesure (43f) est disposée au début de la section de transport suivante dans la direction de transport ou
l'entraînement régulé (21g) est disposé dans la direction de transport au début d'une section de transport (2g) et sert à pousser l'organe de transport (7) dans cette section de transport (2g), la partie d'accouplement (4g) qui présente le dispositif de mesure (43g) étant disposée à la fin de la section de transport précédente dans la direction de transport.

13. Procédé selon la revendication 9, dans lequel dans plusieurs sections de transport (2a-f) du transporteur, chacun des entraînements (21a-f) est régulé par une boucle locale de régulation en fonction de la charge (46a-f) mesurée dans chaque section de transport ou dans une section de transport adjacente.

14. Procédé selon les revendications 9 ou 10, dans lequel dans lequel les deux sections de transport sont des transporteurs circulants (1, 2) séparés, les deux transporteurs (1, 2) étant conçus pour transférer un flux de produits (5) d'un premier transporteur (1) à un deuxième transporteur (2) ou du deuxième transporteur au premier transporteur, les deux transporteurs (2) étant entraînés au moins par l'entraînement régulé (21), **caractérisé en ce que** l'unité de régulation qui régule le déplacement des deux transporteurs (1, 2) exécute les étapes suivantes :
mesure de la charge (46) d'un dispositif mécanique d'accouplement (4) disposé entre les deux transporteurs (1, 2) et qui couple l'un à l'autre le déplacement des deux transporteurs (1, 2) et
régulation de l'entraînement régulé (21) en fonction de la charge (46) qui a été mesurée.

15. Procédé selon l'une des revendications 9 à 14, dans lequel la charge est régulée à une valeur de consigne (45; 45a-f) prédéterminée.

16. Procédé selon la revendication 15, dans lequel la valeur de consigne (45; 45a-f) est réglée en fonction de la charge totale d'un des transporteurs ou de l'ensemble du système de transport.

17. Procédé selon l'une des revendications 15 et 16, dans lequel la valeur de consigne (45; 45a-f) est réglée en fonction de la vitesse de transport du système de transport.

18. Procédé selon l'une des revendications 15 à 17, dans lequel la valeur de consigne (45; 45a-f) est modifiée pendant une phase transitoire du fonctionnement du système de transport.
